# EUROPEAN PATENT APPLICATION

(11) **EP 4 604 258 A1**
(43) Date of publication of application: **20.08.2025**
(21) Application number: 23878994.5
(22) Date of filing: 10.10.2023
(51) Int. Cl.: H01M 10/42

(54) **ENERGY STORAGE SYSTEM AND MANAGEMENT METHOD THEREFOR**

(30) Priority: 19.10.2022 CN 202211279421
(71) Applicant: Contemporary Amperex Technology (Hong Kong) Limited, Hong Kong (HK)
(72) Inventor: XU, Nan, Ningde, Fujian 352100 (CN); ZHANG, Miaomiao, Ningde, Fujian 352100 (CN)
(74) Representative: Gong, Jinping
(86) International application number: PCT/CN2023/123820
(87) International publication number: WO 2024/083002

(57) **Abstract**

The present application relates to an energy storage system and a management method therefor. The energy storage system includes a battery system, a battery management system, and an energy storage converter, the battery system includes a plurality of battery clusters, the battery management system includes a plurality of cluster-level battery management units, the plurality of cluster-level battery management units are communicatively connected to each other, the cluster-level battery management units are connected to the battery clusters in a one-to-one correspondence mode, the energy storage converter is connected to the plurality of battery clusters, and the energy storage converter is communicatively connected to at least one of the cluster-level battery management units. The energy storage system provided by the present application can save hardware costs.

## Description

The present application makes reference to Chinese Patent Application No. 202211279421.3, filed on October 19, 2022 and entitled "Energy Storage System and Management Method Therefor", which is incorporated herein by reference in its entirety.

### TECHNICAL FIELD

The present application relates to the field of energy storage technologies, and in particular, to an energy storage system and a management method therefor.

### BACKGROUND

With rapid development of new energy technologies, energy storage systems have become one of highly important research directions.

An energy storage system generally employs a three-level management system composed of a battery management unit (Battery Management Unit, BMU), a cluster-level battery management unit (Slave Battery Management Unit, SBMU), and a master battery management unit (Master Battery Management Unit, MBMU).

However, currently, a primary function of the master battery management unit is merely to forward data collected by a cluster-level battery management unit, and the three-level management system has a problem of wasting hardware costs.

### SUMMARY

In view of the above problem, the present application provides an energy storage system and a management method therefor, which can save hardware costs.

According to a first aspect, the present application provides an energy storage system. The energy storage system comprises a battery system, a battery management system, and an energy storage converter, the battery system comprises a plurality of battery clusters, the battery management system comprises a plurality of cluster-level battery management units, the plurality of cluster-level battery management units are communicatively connected to each other, the cluster-level battery management units are connected to the battery clusters in a one-to-one correspondence mode, the energy storage converter is connected to the plurality of battery clusters, and the energy storage converter is communicatively connected to at least one of the cluster-level battery management units.

In the technical solution of the embodiments of the present application, one cluster-level battery management unit communicatively connected to the energy storage converter in the plurality of cluster-level battery management units is used as a master, and the cluster-level battery management unit serving as the master implements a control and management function, with no need to dispose a master battery management unit. Therefore, a battery management architecture can be simplified and hardware costs can be saved.

In some embodiments, the cluster-level battery management unit is configured to, when being communicatively connected to the energy storage converter, receive battery information sent by another cluster-level battery management unit and control operation of the another cluster-level battery management unit based on the battery information, and/or receive converter information sent by the energy storage converter and control operation of the energy storage converter based on the converter information.

In the technical solution of the embodiments of the present application, after being connected to the energy storage converter, the cluster-level battery management unit may serve as the master to implement the control and management function, with no need to dispose a master battery management unit. Therefore, the battery management architecture can be simplified and the hardware costs can be saved.

In some embodiments, the cluster-level battery management unit is configured to, after receiving the converter information, send a first control instruction to the energy storage converter based on the converter information, where the first control instruction is used to instruct the energy storage converter to control the plurality of the battery clusters to be charged and/or discharged. In the technical solution of the embodiments of the present application, the cluster-level battery management unit serving as the master implements a function of controlling the battery clusters to be charged and/or discharged.

In some embodiments, the cluster-level battery management unit is further configured to, after being communicatively connected to the energy storage converter, send a second control instruction to the energy storage converter based on a pre-acquired power adjustment curve, where the power adjustment curve matches peak-valley electricity prices, and the second control instruction is used to instruct the energy storage converter to execute a peak shaving and valley filling policy. In the technical solution of the embodiments of the present application, the cluster-level battery management unit serving as the master implements peak shaving and valley filling with respect to electricity prices.

In some embodiments, the cluster-level battery management unit is further configured to determine voltage extrema, current extrema, and temperature extrema of the plurality of battery clusters based on the battery information. In the technical solution of the embodiments of the present application, the cluster-level battery management unit serving as the master implements status monitoring on the batteries.

In some embodiments, the cluster-level battery management unit is further configured to, when detecting no communication connection to the energy storage converter, send the battery information to a cluster-level battery management unit communicatively connected to the energy storage converter. In the technical solution of the embodiments of the present application, the plurality of cluster-level battery management units cooperate with each other, and management of the energy storage system can be implemented, with no need to dispose a master battery management unit. Therefore, the hardware costs can be saved.

In some embodiments, each of the battery clusters comprises at least one battery unit, the battery management system further comprises a plurality of battery management units, the battery management units are connected to the battery units in a one-to-one correspondence mode, and each of the cluster-level battery management units is connected to at least one of the battery management units; and the cluster-level battery management unit is configured to acquire the battery information from the at least one of the battery management units. **In** the technical solution of the embodiments of the present application, a two-level battery management architecture is constructed by using the cluster-level battery management units and the battery management units. The two-level battery management architecture can not only implement functions of a three-level battery management architecture in the conventional technologies, but also simplify the battery management architecture.

In some embodiments, the cluster-level battery management unit is further configured to store the battery information. In the technical solutions of the embodiments of the present application, the stored battery information facilitates relevant statistics collection and summarization subsequently performed by a user.

In some embodiments, a connection manner between the plurality of cluster-level battery management units is a controller area network bus connection, and a connection manner between the cluster-level battery management unit and the energy storage converter is an Ethernet connection. In the technical solution of the embodiments of the present application, communication with the battery management system is implemented through a CAN bus and an Ethernet, thereby implementing the management of the energy storage system.

According to a second aspect, the present application further provides a management method for an energy storage system, which is applied to any cluster-level battery management unit in the energy storage system, where the energy storage system is as described in the first aspect, and the method comprises the following:
receiving converter information sent by an energy storage converter in the energy storage system when being communicatively connected to the energy storage converter; and controlling operation of the energy storage converter based on the converter information.

In the technical solution of the embodiments of the present application, one of the plurality of cluster-level battery management units is used as a master, and the cluster-level battery management unit serving as the master manages the energy storage converter, with no need to dispose a master battery management unit. Therefore, a battery management architecture can be simplified and hardware costs can be saved.

In some embodiments, the controlling operation of the energy storage converter based on the converter information comprises the following: sending a first control instruction to the energy storage converter based on the converter information, where the first control instruction is used to instruct the energy storage converter to control a plurality of battery clusters in the energy storage system to be charged and/or discharged. In the technical solution of the embodiments of the present application, the cluster-level battery management unit serving as the master implements control over the energy storage converter, thereby implementing charging and discharging of the battery clusters.

In some embodiments, the controlling operation of the energy storage converter based on the converter information comprises the following: sending a second control instruction to the energy storage converter based on a pre-acquired power adjustment curve, where the power adjustment curve matches peak-valley electricity prices, and the second control instruction is used to instruct the energy storage converter to execute a peak shaving and valley filling policy. **In** the technical solutions of the embodiments of the present application,

In some embodiments, the method further comprises the following: receiving battery information sent by another cluster-level battery management unit, and controlling operation of the another cluster-level battery management unit based on the battery information. **In** the technical solution of the embodiments of the present application, one of the plurality of cluster-level battery management units is used as a master, and the cluster-level battery management unit serving as the master manages another cluster-level battery management unit, with no need to dispose a master battery management unit. Therefore, the battery management architecture can be simplified and the hardware costs can be saved.

In some embodiments, the method further comprises the following: determining voltage extrema, current extrema, and temperature extrema of the plurality of battery clusters in the energy storage system based on the battery information. In the technical solution of the embodiments of the present application, the cluster-level battery management unit serving as the master implements status monitoring on the batteries, with no need to dispose a master battery management unit. Therefore, the battery management architecture can be simplified and the hardware costs can be saved.

In some embodiments, the method further comprises the following: when all of the plurality of cluster-level battery management units are connected to the energy storage converter, selecting a target cluster-level battery management unit from the plurality of cluster-level battery management units, so that the target cluster-level battery management unit performs the step of receiving the converter information sent by the energy storage converter. **In** the technical solution of the embodiments of the present application, the plurality of cluster-level battery management units may be used in turn, and when a current master becomes faulty, a normal master may be used for management, thereby improving management reliability.

In some embodiments, the method further comprises the following: when not being communicatively connected to the energy storage converter, sending the battery information to a cluster-level battery management unit communicatively connected to the energy storage converter. In the technical solution of the embodiments of the present application, the cluster-level battery management system serving as the master implements peak shaving and valley filling.

In some embodiments, the method further comprises the following: acquiring the battery information from at least one battery management unit in the energy storage system. In the technical solution of the embodiments of the present application, the cluster-level battery management unit serving as the master implements status monitoring on the batteries.

In some embodiments, the method further comprises the following: storing the battery information. In the technical solution of the embodiments of the present application, the battery information provides a basis for the cluster-level battery management unit to manage the energy storage system, monitor a battery status, perform information statistics collection, and perform troubleshooting.

### DESCRIPTION OF DRAWINGS

Various other advantages and benefits will become clear to a person of ordinary skill in the art upon reading the detailed description of the optional implementations below. The accompanying drawings are used only for the purpose of illustrating the optional implementations and are not to be construed as limitations on the present application. Moreover, the same reference numerals are used to denote the same components throughout the accompanying drawings. In the accompanying drawings:
FIG. 1 is a schematic diagram of a structure of an energy storage system in the conventional technologies;
FIG. 2 is one of schematic diagrams of a structure of an energy storage system according to an embodiment of the present application;
FIG. 3 is one of schematic diagrams of a structure of an energy storage system according to an embodiment of the present application;
FIG. 4 is flowchart 1 of steps of a management method for an energy storage system according to an embodiment of the present application; and
FIG. 5 is flowchart 2 of steps of a management method for an energy storage system according to an embodiment of the present application.

### Description of reference signs:

battery system 10; battery management system 20; energy storage converter 30; and
battery cluster 101; cluster-level battery management unit 201; battery unit 102; battery management unit 202.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, unless otherwise specified and defined explicitly, the technical terms "mounted", "connected to", "connect", "fixed", and the like should be understood in a broad sense, which, for example, may be understood as fixed connection, detachable connection or integral connection, may be understood as mechanical connection, or electrical connection, or may be understood as direct connection, indirect connection via an intermediate medium, or communication between the interiors of two elements or interactions between two elements. A person of ordinary skill in the art may understand the specific meanings of the above terms in the embodiments of the present application according to specific situations.

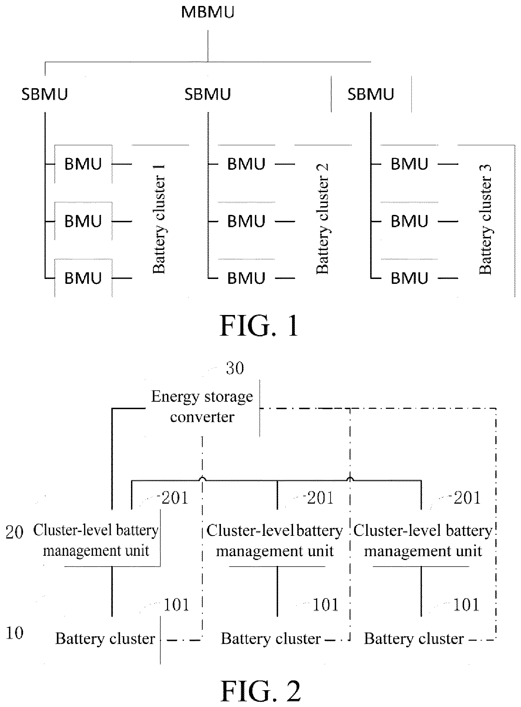

At present, referring to FIG. 1, an energy storage system generally employs a three-level management system, i.e., includes a battery management unit BMU, a cluster-level battery management unit SBMU, and a master battery management unit MBMU. However, a primary function of the master battery management unit MBMU is merely to forward data collected by a cluster-level battery management unit SBMU, and the three-level management system has a problem of wasting hardware costs.

An embodiment of the present application discloses an energy storage system. The energy storage system includes a battery system, a battery management system, and an energy storage converter. The battery management system includes a cluster-level battery management unit SBMU and a battery management unit BMU, and does not include a master battery management unit MBMU, with a function of the master battery management unit MBMU being implemented by a cluster-level battery management unit SBMU communicatively connected to the energy storage converter. In this way, the management system can be simplified from current three levels into two levels in this embodiment of the present application, thereby saving hardware costs.

The energy storage system disclosed in this embodiment of the present application is applicable to, but not limited to, an electric device such as a vehicle, a ship, or an aircraft.

According to some embodiments of the present application, referring to FIG. 2, an energy storage system is provided. The energy storage system includes a battery system 10, a battery management system 20, and an energy storage converter (Power Conversion System, PCS) 30, the battery system 10 includes a plurality of battery clusters 101, the battery management system 20 includes a plurality of cluster-level battery management units 201, the plurality of cluster-level battery management units 201 are communicatively connected to each other, the cluster-level battery management units 201 are connected to the battery clusters 101 in a one-to-one correspondence mode, the energy storage converter 30 is connected to the plurality of battery clusters 101, and the energy storage converter is communicatively connected to at least one of the cluster-level battery management units.

In the embodiments of the present application, the energy storage system includes the battery system 10, the battery management system 20, and the energy storage converter 30. The battery system 10 is constituted by connecting the plurality of battery clusters 101 in parallel, and each of the battery clusters 101 may include at least one battery unit. The battery management system 20 includes the plurality of cluster-level battery management units 201, and one cluster-level battery management unit 201 is correspondingly connected to one battery cluster 101, to facilitate management of a battery in a corresponding cluster. The energy storage converter 30 is connected to the plurality of battery clusters 101 to control the plurality of battery clusters 101. In FIG. 2, a straight line indicates a communication connection, and a dashed line indicates an electrical connection.

The energy storage converter is communicatively connected to at least one of the cluster-level battery management units. One cluster-level battery management unit 201 or a plurality of cluster-level battery management units 202 in the plurality of cluster-level battery management units 201 are communicatively connected to the energy storage converter 30. The cluster-level battery management unit 201 communicatively connected to the energy storage converter 30 serves as a master in the plurality of cluster-level battery management units 201, and another cluster-level battery management unit 201 not communicatively connected to the energy storage converter 30 serves as a slave in the plurality of cluster-level battery management units 201.

The cluster-level battery management unit 201 serving as the master can implement management of the energy storage converter and manage another cluster-level battery cluster. A specific management manner is not limited in the embodiments of the present application.

**In** the above embodiments, the energy storage system includes the battery system, the battery management system, and the energy storage converter, the battery system includes the plurality of battery clusters, the battery management system includes the plurality of cluster-level battery management units, the plurality of cluster-level battery management units are communicatively connected to each other, the cluster-level battery management units are connected to the battery clusters in the one-to-one correspondence mode, the energy storage converter is connected to the plurality of battery clusters, and the energy storage converter is communicatively connected to at least one of the cluster-level battery management units. **In** the embodiments of the present application, one cluster-level battery management unit connected to the energy storage converter in the plurality of cluster-level battery management units is used as the master and the cluster-level battery management unit serving as the master implements a control and management function, with no need to dispose a master battery management unit. Therefore, a battery management architecture can be simplified and hardware costs can be saved.

According to some embodiments of the present application, the cluster-level battery management unit 201 is configured to, when being communicatively connected to the energy storage converter 30, receive battery information sent by another cluster-level battery management unit 201 and control operation of the another cluster-level battery management unit 201 based on the battery information, and/or receive converter information sent by the energy storage converter 30 and control operation of the energy storage converter 30 based on the converter information.

The cluster-level battery management unit 201 serving as the master implements the following function: receiving the battery information sent by the another cluster-level battery management unit 201, and controlling the operation of the another cluster-level battery management unit 201 based on the battery information. The battery information may include a voltage, a current, and a temperature of a battery cell, a voltage and a current of a battery cluster, and the like. The battery information is not limited in the embodiments of the present application, and may be set according to an actual situation.

For example, after receiving battery information, a cluster-level battery management unit A1 serving as a master determines, based on the battery information, that a battery cluster B1 needs to reduce an output power. In this case, the cluster-level battery management unit A1 controls operation of a cluster-level battery management unit A2 correspondingly connected to the battery cluster B1, so that the cluster-level battery management unit A2 reduces the output power of the battery cluster B1. Alternatively, after receiving the battery information, the cluster-level battery management unit A1 serving as the master determines, based on the battery information, that the battery cluster B2 becomes faulty. In this case, the cluster-level battery management unit A1 controls operation of a cluster-level battery management unit A3 correspondingly connected to the battery cluster B2, so that the cluster-level battery management unit A3 executes a corresponding protective measure, for example, performs a high-voltage shutdown operation on the battery cluster B2.

The cluster-level battery management serving as the master may further implement the following function: receiving the converter information sent by the energy storage converter 30, and controlling the operation of the energy storage converter 30 based on the converter information. The converter information may include a running power, a running status, a fault existence status, and the like of the energy storage converter. The converter information is not limited in the embodiments of the present application, and may be set according to an actual situation.

For example, the energy storage converter 30 sends converter information to the cluster-level battery management unit A1 serving as the master, and the cluster-level battery management unit A1 controls the running power and the running status of the energy storage converter 30 based on the converter information, or controls the energy storage converter 30 to perform troubleshooting, etc.

It should be noted that a control function that can be implemented by the cluster-level battery management unit serving as the master is not limited to the above description, and the cluster-level battery management unit serving as the master may further integrate a function of a master battery management unit MBMU and a function of an energy management system EMS that are employed in the conventional technologies.

In some embodiments, the plurality of cluster-level battery management units 201 are individually identified, for example, the plurality of cluster-level battery management units 201 are numbered to distinguish between each other, so that the cluster-level battery management units 201 are better controlled.

In the above embodiments, when being communicatively connected to the energy storage converter, the cluster-level battery management unit receives the battery information sent by the another cluster-level battery management unit and controls the operation of the another cluster-level battery management unit based on the battery information, and/or receives the converter information sent by the energy storage converter and controls the operation of the energy storage converter based on the converter information. **In** the embodiments of the present application, one of the plurality of cluster-level battery management units is used as the master and the cluster-level battery management unit serving as the master implements the control and management function, with no need to dispose a master battery management unit. Therefore, the battery management architecture can be simplified and the hardware costs can be saved.

According to some embodiments of the present application, the cluster-level battery management unit 201 is configured to, after receiving the converter information, send a first control instruction to the energy storage converter 30 based on the converter information, where the first control instruction is used to instruct the energy storage converter 30 to control the plurality of the battery clusters 101 to be charged and/or discharged.

In the embodiments of the present application, one function of the cluster-level battery management unit 201 serving as the master is to control, through the energy storage converter 30, the battery clusters 101 to be charged and/or discharged. For example, a cluster-level battery management unit A1 serves as a master, the energy storage converter 30 sends a charging power of a battery cluster B1 to the cluster-level battery management unit A1, and the cluster-level battery management unit A1 sends a first control instruction to the energy storage converter 30 based on the charging power of the battery cluster B1. The energy storage converter 30 receives the first control instruction, and adjusts the charging power of the battery cluster B1 based on the first control instruction. Alternatively, the energy storage converter 30 sends a discharging power of a battery cluster B2 to the cluster-level battery management unit A1, and the cluster-level battery management unit A1 sends a first control instruction to the energy storage converter 30 based on the discharging power of the battery cluster B2. The energy storage converter 30 receives the first control instruction, and adjusts the discharging power of the battery cluster B2 based on the first control instruction.

In the above embodiments, after receiving the converter information, the cluster-level battery management unit sends the first control instruction to the energy storage converter based on the converter information, where the first control instruction instructs the energy storage converter to control the plurality of the battery clusters to be charged and/or discharged. In the embodiments of the present application, the cluster-level battery management unit serving as the master implements a function of controlling the battery clusters to be charged and/or discharged, with no need to dispose a master battery management unit. Therefore, the battery management architecture can be simplified and the hardware costs can be saved.

According to some embodiments of the present application, the cluster-level battery management unit 201 is further configured to, after being communicatively connected to the energy storage converter 30, send a second control instruction to the energy storage converter 30 based on a pre-acquired power adjustment curve, where the second control instruction is used to instruct the energy storage converter 30 to execute a peak shaving and valley filling policy.

The power adjustment curve matches peak-valley electricity prices, i.e., when an electricity price is high, a discharging power is high and a charging power is low in the power adjustment curve; or when an electricity price is low, a discharging power is low and a charging power is high in the power adjustment curve. In actual application, the peak-valley electricity prices and the power adjustment curve may be stored in each cluster-level battery management unit 201 in advance, so that when any one of the cluster-level battery management units 201 serves as a master, corresponding control can be implemented based on the power adjustment curve.

In the embodiments of the present application, another function of the cluster-level battery management unit 201 serving as the master is to implement peak shaving and valley filling with respect to electricity prices by using the energy storage converter 30. Specifically, the cluster-level battery management unit 201 serving as the master sends the second control instruction to the energy storage converter 30 based on the pre-acquired power adjustment curve. The energy storage converter 30 adjusts a charging power and/or a discharging power of a battery based on the second control instruction, so that the battery cluster 101 is discharged when an electricity price is high and is charged when an electricity price is low. In this way, electricity costs consumed by the energy storage system can be reduced and peak shaving and valley filling with respect to electricity prices can be implemented.

In the above embodiments, after being communicatively connected to the energy storage converter, the cluster-level battery management unit sends the second control instruction to the energy storage converter based on the pre-acquired power adjustment curve, where the second control instruction instructs the energy storage converter to execute the peak shaving and valley filling policy. In the embodiments of the present application, the cluster-level battery management unit serving as the master implements peak shaving and valley filling with respect to electricity prices, with no need to dispose a master battery management unit. Therefore, the battery management architecture can be simplified and the hardware costs can be saved.

According to some embodiments of the present application, the cluster-level battery management unit 201 is further configured to determine voltage extrema, current extrema, and temperature extrema of the plurality of battery clusters 101 based on the battery information.

In the embodiments of the present application, another function of the cluster-level battery management unit 201 serving as the master is to implement status monitoring on batteries. Specifically, after acquiring the battery information from the another cluster-level battery management unit 201, the cluster-level battery management unit 201 serving as the master may calculate, based on the battery information, a maximum value and a minimum value of battery voltages, a maximum value and a minimum value of battery currents, and a maximum value and a minimum value of battery temperatures, as well as a maximum value and a minimum value of cluster voltages and a maximum value and a minimum value of cluster currents. In actual application, the voltage extrema, the current extrema, and the temperature extrema are not limited to the above description.

After calculating various extrema, the cluster-level battery management unit 201 serving as the master may determine, based on preset thresholds, whether the battery cell and the battery cluster 101 are both operating within normal ranges. If a calculated extremum exceeds a preset threshold, it indicates that the battery or the battery cluster 101 experiences an abnormal situation, and a corresponding protective measure needs to be taken.

The protective measure may be reducing a battery voltage, reducing a battery current, reducing a battery temperature, reducing a voltage of the battery cluster 101, reducing a current of the battery cluster 101, performing a high-voltage shutdown operation on the battery cluster 101, etc. The protective measure is not limited in the embodiments of the present application, and may be set according to an actual situation.

In the above embodiments, the cluster-level battery management unit determines the voltage extrema, the current extrema, and the temperature extrema of the plurality of battery clusters based on the battery information. **In** the embodiments of the present application, the cluster-level battery management unit serving as the master implements status monitoring on the batteries, with no need to dispose a master battery management unit. Therefore, the battery management architecture can be simplified and the hardware costs can be saved.

According to some embodiments of the present application, the cluster-level battery management unit 201 is further configured to, when detecting no communication connection to the energy storage converter 30, send the battery information to a cluster-level battery management unit 201 communicatively connected to the energy storage converter 30.

In the embodiments of the present application, if a cluster-level battery management unit 201 is not communicatively connected to the energy storage converter 30, the cluster-level battery management unit 201 serves as a slave in the plurality of cluster-level battery management units 201. A primary function of a cluster-level battery management unit 201 serving as a slave is to collect battery information and upload the battery information to the cluster-level battery management unit 201 serving as the master, so that the cluster-level battery management unit 201 serving as the master can manage the energy storage system.

For example, if a cluster-level battery management unit A1 detects a communication connection to the energy storage converter 30, but a cluster-level battery management unit A2, a cluster-level battery management unit A3, ..., do not detect a communication connection to the energy storage converter 30, the cluster-level battery management unit A1 serves as a master, the cluster-level battery management unit A2, the cluster-level battery management unit A3, ..., serve as slaves, and the cluster-level battery management unit A2, the cluster-level battery management unit A3, ..., all send collected battery information to the cluster-level battery management unit A1.

In the above embodiments, when detecting no communication connection to the energy storage converter, the cluster-level battery management unit sends the battery information to a cluster-level battery management unit communicatively connected to the energy storage converter. In the embodiments of the present application, the cluster-level battery management unit serving as a slave collects the battery information, so that the cluster-level battery management unit serving as the master can manage the energy storage system based on the battery information. The plurality of cluster-level battery management units cooperate with each other, and management of the energy storage system can be implemented, with no need to dispose a master battery management unit. Therefore, the hardware costs can be saved.

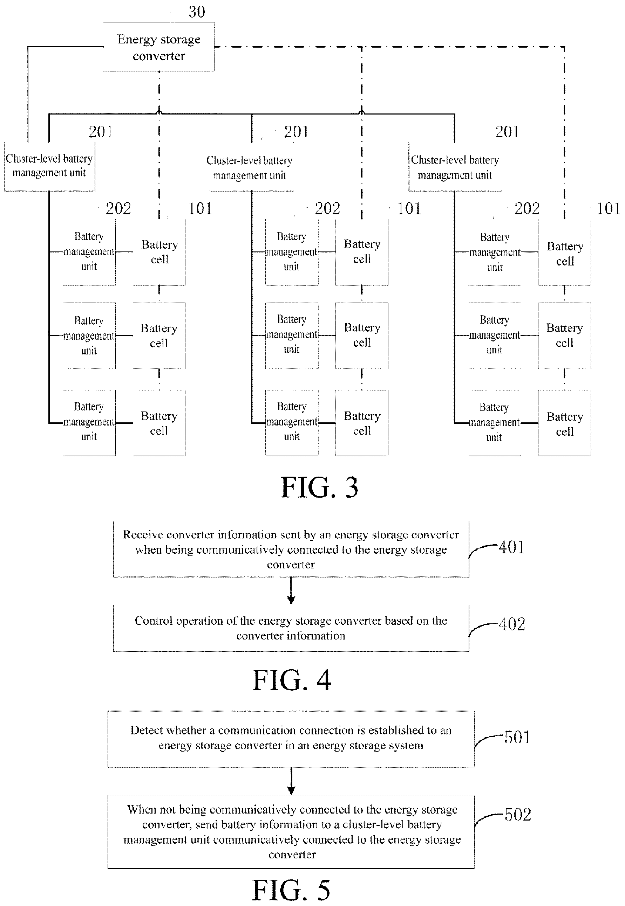

According to some embodiments of the present application, referring to FIG. 3, each of the battery clusters 101 includes at least one battery unit 102, the battery management system 20 further includes a plurality of battery management units 202, the battery management units 202 are connected to the battery units 102 in a one-to-one correspondence mode, and the cluster-level battery management units 201 are connected to at least one of the battery management units 202; and the cluster-level battery management unit 201 is configured to acquire the battery information from at least one of the battery management units 202.

In the embodiments of the present application, each of the battery clusters 101 may be constituted by connecting a plurality of battery units 102 in series. Each battery unit 102 may be a battery cell or a battery box, which is not limited in the embodiments of the present application. The battery management system 20 further includes the plurality of battery management units 202, each of the battery management units 202 is correspondingly connected to one battery unit 102, and the plurality of battery management units 202 are connected to the cluster-level battery management units 201 of corresponding clusters. In FIG. 3, a straight line indicates a communication connection, and a dashed line indicates an electrical connection.

In actual application, each of the battery management units 202 collects battery information of a correspondingly connected battery unit 102, for example, collects a battery voltage, a battery current, a battery temperature, etc. of the correspondingly connected battery unit 102. Subsequently, each battery unit 202 uploads received battery information to the cluster-level battery management unit 201 of a corresponding cluster. The cluster-level battery management unit 201 receives battery information uploaded by at least one of the battery units 202.

It should be noted that each of the cluster-level battery management units 201 acquires the battery information uploaded by the battery management unit 202 of the corresponding cluster, regardless of whether the cluster-level battery management unit 201 serves as the master or a slave. The cluster-level battery management unit 201 serving as the master further acquires battery information uploaded by the cluster-level battery management unit 201 serving as a slave.

In some embodiments, the cluster-level battery management unit 201 is further configured to store the battery information.

After acquiring the battery information, each of the cluster-level battery management units 201 may store the battery information. The cluster-level battery management unit 201 serving as the master may further store the battery information uploaded by the cluster-level battery management unit 201 serving as a slave. Subsequently, a user may perform relevant statistics collection and summarization based on the stored battery information. In addition, the battery information may include fault information and anomaly information, etc., and the user may further check the fault information and the anomaly information subsequently to perform troubleshooting.

In the above embodiments, each of the battery clusters includes at least one battery unit, the battery management system further includes the plurality of battery management units, the battery management units are connected to the battery units in the one-to-one correspondence mode, and each of the cluster-level battery management units is connected to at least one of the battery management units; and the cluster-level battery management unit is configured to acquire the battery information from the at least one of the battery management units. In the embodiments of the present application, a two-level battery management architecture is constructed by using the cluster-level battery management units and the battery management units. The two-level battery management architecture can not only implement functions of a three-level battery management architecture in the conventional technologies, but also simplify the battery management architecture.

According to some embodiments of the present application, a connection manner between the plurality of cluster-level battery management units 201 is a controller area network (CAN) bus connection, and a connection manner between the cluster-level battery management unit 201 and the energy storage converter 30 is an Ethernet connection.

In the embodiments of the present application, the plurality of cluster-level battery management units 201 may be connected to each other through a CAN bus. In this way, the cluster-level battery management unit 201 serving as a slave may upload, through the CAN bus, the battery information to the cluster-level battery management unit 201 serving as the master, and the cluster-level battery management unit 201 serving as the master may also send, through the CAN bus, a control instruction to the cluster-level battery management unit 201 serving as a slave, thereby controlling the cluster-level battery management unit 201 serving as a slave.

Each of the cluster-level battery management units 201 may be provided with an Ethernet interface. After a cable connected to the energy storage converter 30 is connected to the Ethernet interface of one of the cluster-level battery management units 201 by the user, the cluster-level battery management unit 201 may serve as the master, and another cluster-level battery management unit 201 may serve as a slave.

In the above embodiments, the plurality of cluster-level battery management units are connected through the CAN bus, and the cluster-level battery management unit serving as the master is connected to the energy storage converter through the Ethernet. In the embodiments of the present application, communication with the battery management system is implemented through the CAN bus and the Ethernet, thereby implementing the management of the energy storage system.

According to some embodiments of the present application, referring to FIG. 4, a management method for an energy storage system is provided, which is applied to any cluster-level battery management unit in the energy storage system, where the energy storage system is as described in the above embodiments. In the embodiments of the present application, the method may include the following steps:
Step 401: receiving converter information sent by an energy storage converter when being communicatively connected to the energy storage converter; and
Step 402: controlling operation of the energy storage converter based on the converter information.

If a cluster-level battery management unit is communicatively connected to the energy storage converter, the cluster-level battery management unit serves as a master of the plurality of cluster-level battery management units. The cluster-level battery management unit serving as the master may receive the converter information sent by the energy storage converter, and control the operation of the energy storage converter based on the converter information.

For example, a cluster-level battery management unit A1 serving as the master may control a running power and a running status of the energy storage converter, or control the energy storage converter to perform troubleshooting, etc. How to control the energy storage converter is not limited in the embodiments of the present application, and may be set according to an actual situation.

In the above embodiments, the cluster-level battery management unit in the energy storage system receives the converter information sent by the energy storage converter in the energy storage system when being communicatively connected to the energy storage converter, and controls the operation of the energy storage converter based on the converter information. **In** the embodiments of the present application, one of the plurality of cluster-level battery management units is used as the master, and the cluster-level battery management unit serving as the master manages the energy storage converter, with no need to dispose a master battery management unit. Therefore, a battery management architecture can be simplified and hardware costs can be saved.

According to some embodiments of the present application, a process of controlling the operation of the energy storage converter based on the converter information may include the following: sending a first control instruction to the energy storage converter based on the converter information, where the first control instruction is used to instruct the energy storage converter to control a plurality of battery clusters in the energy storage system to be charged and/or discharged.

In the embodiments of the present application, after receiving the converter information sent by the energy storage converter, the cluster-level battery management unit serving as the master determines, based on the converter information, to send the first control instruction to the energy storage converter. The energy storage converter receives the first control instruction, and based on the first control instruction, controls the plurality of battery clusters to be charged; or based on the first control instruction, controls the plurality of battery clusters to be discharged; or controls some of the battery clusters to be charged and controls the other of the battery clusters to be discharged.

In the above embodiments, the cluster-level battery management unit serving as the master sends the first control instruction to the energy storage converter based on the converter information, where the first control instruction instructs the energy storage converter to control the plurality of the battery clusters in the energy storage system to be charged and/or discharged. In the embodiments of the present application, the cluster-level battery management unit serving as the master implements charging and discharging of the battery clusters, with no need to dispose a master battery management unit. Therefore, the battery management architecture can be simplified and the hardware costs can be saved.

According to some embodiments of the present application, a process of controlling the operation of the energy storage converter based on the converter information may include the following: sending a second control instruction to the energy storage converter based on a pre-acquired power adjustment curve, where the power adjustment curve matches peak-valley electricity prices, and the second control instruction is used to instruct the energy storage converter to execute a peak shaving and valley filling policy.

In the embodiments of the present application, the cluster-level battery management unit serving as the master may pre-acquire the peak-valley electricity prices, and then determine the power adjustment curve based on the peak-valley electricity prices, or may directly acquire a power adjustment curve prepared by a user based on the peak-valley electricity prices.

Subsequently, the cluster-level battery management unit serving as the master may send the second control instruction to the energy storage converter based on the power adjustment curve. After receiving the second control instruction, the energy storage converter increases a discharging power and decreases a charging power upon a high electricity price or decreases a discharging power and increases a charging power upon a low electricity price based on the second control instruction. In this way, it is possible to control the energy storage system to mainly be discharged upon a high electricity price, and control the energy storage system to mainly be charged upon a low electricity price, thereby implementing peak shaving and valley filling with respect to electricity prices and saving electricity costs.

In the above embodiments, the cluster-level battery management unit serving as the master sends the second control instruction to the energy storage converter based on the pre-acquired power adjustment curve, where the second control instruction instructs the energy storage converter to execute the peak shaving and valley filling policy. In the embodiments of the present application, the cluster-level battery management system serving as the master implements peak shaving and valley filling, with no need to dispose a master battery management unit. Therefore, the battery management architecture can be simplified and the hardware costs can be saved.

According to some embodiments of the present application, the method may further include the following: receiving battery information sent by another cluster-level battery management unit, and controlling operation of the another cluster-level battery management unit based on the battery information.

In the embodiments of the present application, the cluster-level battery management unit serving as the master may further receive the battery information sent by the another cluster-level battery management unit, determine an operation mode of the another cluster-level battery management unit based on the battery information, and control the operation of the another cluster-level battery management unit based on the determined operation mode.

For example, a cluster-level battery management unit A1 serving as a master may control cluster-level battery management units A2 and A3 to adjust output powers of battery clusters, monitor the battery clusters, perform a protective measure, and the like. How to control another cluster-level battery management unit is not limited in the embodiments of the present application, and may be set according to an actual situation.

In the above embodiments, the battery information sent by the another cluster-level battery management unit is received, and the operation of the another cluster-level battery management unit is controlled based on the battery information. **In** the embodiments of the present application, one of the plurality of cluster-level battery management units is used as the master and the cluster-level battery management unit serving as the master manages another cluster-level battery management unit, with no need to dispose a master battery management unit. Therefore, the battery management architecture can be simplified and the hardware costs can be saved.

According to some embodiments of the present application, the method may further the following: determining voltage extrema, current extrema, and temperature extrema of the plurality of battery clusters in the energy storage system based on the battery information.

In the embodiments of the present application, the cluster-level battery management unit serving as the master acquires battery information of the plurality of battery clusters, and then based on the battery information of the plurality of battery clusters, may calculate a maximum value and a minimum value of battery voltages, a maximum value and a minimum value of battery currents, and a maximum value and a minimum value of battery temperatures for a plurality of battery cells, and may also calculate a maximum value and a minimum value of cluster voltages and a maximum value and a minimum value of cluster currents of the plurality of battery clusters. Extremum calculation is not limited in the embodiments of the present application, and may be set according to an actual situation.

In the above embodiments, the cluster-level battery management unit serving as the master determines the voltage extrema, the current extrema, and the temperature extrema of the plurality of battery clusters in the energy storage system based on the battery information. **In** the embodiments of the present application, the cluster-level battery management unit serving as the master implements status monitoring on batteries, with no need to dispose a master battery management unit. Therefore, the battery management architecture can be simplified and the hardware costs can be saved.

According to some embodiments of the present application, the method may further include the following: when all of the plurality of cluster-level battery management units are connected to the energy storage converter, selecting a target cluster-level battery management unit from the plurality of cluster-level battery management units, so that the target cluster-level battery management unit performs the step of receiving the converter information sent by the energy storage converter.

In actual application, the energy storage converter may be connected to the plurality of cluster-level battery management units, and the target cluster-level battery management unit may be selected from the plurality of cluster-level battery management units connected to the energy storage converter according to a preset rule, so that the target cluster-level battery management unit performs step 401 and step 402.

The preset rule may be following connection times, serial numbers of the cluster-level battery management, or priorities of the cluster-level battery management units. The preset rule is not limited in the embodiments of the present application.

For example, each of the cluster-level battery management units determines a time at which a communication connection is established to the energy storage converter, and uses one cluster-level battery management unit with the earliest connection time as the master. Alternatively, one cluster-level battery management unit with a leading serial number in the plurality of cluster-level battery management units is used as the master. Alternatively, one cluster-level battery management unit with a high priority in the plurality of cluster-level battery management units may be used as the master.

In the above embodiments, when all of the plurality of cluster-level battery management units are connected to the energy storage converter, the target cluster-level battery management unit is selected from the plurality of cluster-level battery management units, so that the target cluster-level battery management unit performs the step of receiving the converter information sent by the energy storage converter. In the technical solution of the embodiments of the present application, the plurality of cluster-level battery management units may be used in turn, and when a current master becomes faulty, a normal master may be used for management, thereby improving management reliability.

According to some embodiments of the present application, referring to FIG. 5, the embodiments of the present application may further include the following steps:
Step 501: detecting whether a communication connection is established to the energy storage converter in the energy storage system.

The cluster-level battery management unit detects whether a communication connection is established with the energy storage converter in the energy storage system. Specifically, whether a connection signal of an energy storage connector is acquired may be detected by software, or whether a cable is connected to an Ethernet interface of the cluster-level battery management unit may be detected by hardware. It should be noted that a detection manner is not limited to the above description, and may be set according to an actual situation.

Step 502: when not being communicatively connected to the energy storage converter, sending the battery information to a cluster-level battery management unit communicatively connected to the energy storage converter.

If a cluster-level battery management unit detects no communication connection to the energy storage converter, the cluster-level battery management unit serves as a slave in the plurality of cluster-level battery management units. The cluster-level battery management unit serving as a slave may send, through a CAN bus, battery information to the cluster-level battery management unit serving as the master for the cluster-level battery management unit serving as the master to manage the energy storage system based on the battery information.

In the above embodiments, when not being communicatively connected to the energy storage converter, the battery information is sent to a cluster-level battery management unit communicatively connected to the energy storage converter. In the embodiments of the present application, the cluster-level battery management unit serving as a slave may upload the battery information for the cluster-level battery management unit serving as the master to manage the energy storage system based on the battery information.

According to some embodiments of the present application, the method may further include the following: acquiring the battery information from at least one battery management unit in the energy storage system.

The energy storage system may further include a plurality of battery management units, one battery management unit is correspondingly connected to one battery unit, and the plurality of battery units are connected to the cluster-level battery management units of the corresponding clusters.

Each of the battery management units acquires battery information of a correspondingly connected battery unit, and then the battery management unit sends the acquired battery information to a cluster-level battery management unit of a corresponding cluster, so that each cluster-level battery management unit can acquire the battery information.

According to some embodiments of the present application, the method may further include the following: storing the battery information.

After acquiring the battery information, each of the cluster-level battery management units may store the battery information. The cluster-level battery management unit serving as the master may further store battery information uploaded by another cluster-level battery management unit. Storing battery information can facilitate subsequent statistics collection, summarization, and checking.

In the above embodiments, the cluster-level battery management unit acquires the battery information from the at least one battery management unit in the energy storage system, and stores the battery information. The battery information provides a basis for the cluster-level battery management unit to manage the energy storage system, monitor a battery status, perform information statistics collection, and perform troubleshooting.

The technical features of the above embodiments may be randomly combined, and not all possible combinations of the technical features in the above embodiments are described for brevity of description. However, the combinations of the technical features should be regarded as falling within the scope set forth in the present specification provided that they are not contradictory.

The above embodiments merely illustrate several implementations of the present application to facilitate specific and detailed understanding of the technical solutions of the present application, but are not to be construed as limiting the protection scope of the present invention patent. It should be noted that, for a person of ordinary skill in the art, several variations and improvements may further be made without departing from the concept of the present application, and the variations and improvements shall all fall within the protection scope of the present application. It should be understood that the technical solutions obtained by a person skilled in the art through logical analysis, reasoning, or limited experimentation based on the technical solutions provided in the present application shall all fall within the protection scope of the appended claims described in the present application. Therefore, the protection scope of the present application patent should be subject to the content of the appended claims, and the specification and the drawings may be used to explain the content of the claims.

## Claims

1. An energy storage system, wherein the energy storage system comprises a battery system, a battery management system, and an energy storage converter, the battery system comprises a plurality of battery clusters, the battery management system comprises a plurality of cluster-level battery management units, the plurality of cluster-level battery management units are communicatively connected to each other, the cluster-level battery management units are connected to the battery clusters in a one-to-one correspondence mode, the energy storage converter is connected to the plurality of battery clusters, and the energy storage converter is communicatively connected to at least one of the cluster-level battery management units.

2. The energy storage system according to claim **1,** wherein the cluster-level battery management unit is configured to, when being communicatively connected to the energy storage converter, receive battery information sent by another cluster-level battery management unit and control operation of the another cluster-level battery management unit based on the battery information, and/or receive converter information sent by the energy storage converter and control operation of the energy storage converter based on the converter information.

3. The energy storage system according to claim 1, wherein the cluster-level battery management unit is configured to, after receiving the converter information, send a first control instruction to the energy storage converter based on the converter information, wherein the first control instruction is used to instruct the energy storage converter to control the plurality of the battery clusters to be charged and/or discharged.

4. The energy storage system according to claim 1, wherein the cluster-level battery management unit is further configured to, after being communicatively connected to the energy storage converter, send a second control instruction to the energy storage converter based on a pre-acquired power adjustment curve, wherein the power adjustment curve matches peak-valley electricity prices, and the second control instruction is used to instruct the energy storage converter to execute a peak shaving and valley filling policy.

5. The energy storage system according to claim 1, wherein the cluster-level battery management unit is further configured to determine voltage extrema, current extrema, and temperature extrema of the plurality of battery clusters based on the battery information.

6. The energy storage system according to any one of claims 1 to 5, wherein the cluster-level battery management unit is further configured to, when detecting no communication connection to the energy storage converter, send the battery information to a cluster-level battery management unit communicatively connected to the energy storage converter.

7. The energy storage system according to claim 6, wherein each of the battery clusters comprises at least one battery unit, the battery management system further comprises a plurality of battery management units, the battery management units are connected to the battery units in a one-to-one correspondence mode, and each of the cluster-level battery management units is connected to at least one of the battery management units; and
the cluster-level battery management unit is configured to acquire the battery information from the at least one of the battery management units.

8. The energy storage system according to claim 6, wherein the cluster-level battery management unit is further configured to store the battery information.

9. The energy storage system according to claim 8, wherein a connection manner between the plurality of cluster-level battery management units is a controller area network bus connection, and a connection manner between the cluster-level battery management unit and the energy storage converter is an Ethernet connection.

10. A management method for an energy storage system, applied to any cluster-level battery management unit in an energy storage system, wherein the energy storage system is as described in any one of claims 1 to 9, and the method comprises the following:
receiving converter information sent by an energy storage converter in the energy storage system when being communicatively connected to the energy storage converter; and
controlling operation of the energy storage converter based on the converter information.

11. The method according to claim 10, wherein the controlling operation of the energy storage converter based on the converter information comprises the following:
sending a first control instruction to the energy storage converter based on the converter information, wherein the first control instruction is used to instruct the energy storage converter to control a plurality of battery clusters in the energy storage system to be charged and/or discharged.

12. The method according to claim 10, wherein the controlling operation of the energy storage converter based on the converter information comprises the following:
sending a second control instruction to the energy storage converter based on a pre-acquired power adjustment curve, wherein the power adjustment curve matches peak-valley electricity prices, and the second control instruction is used to instruct the energy storage converter to execute a peak shaving and valley filling policy.

13. The method according to claim 10, wherein the method further comprises the following:
receiving battery information sent by another cluster-level battery management unit, and controlling operation of the another cluster-level battery management unit based on the battery information.

14. The method according to claim 10, wherein the method further comprises the following:
determining voltage extrema, current extrema, and temperature extrema of the plurality of battery clusters in the energy storage system based on the battery information.

15. The method according to claim 10, wherein the method further comprises the following:
when all of the plurality of cluster-level battery management units are connected to the energy storage converter, selecting a target cluster-level battery management unit from the plurality of cluster-level battery management units, so that the target cluster-level battery management unit performs the step of receiving the converter information sent by the energy storage converter.

16. The method according to any one of claims 10 to 15, wherein the method further comprises the following:
when not being communicatively connected to the energy storage converter, sending the battery information to a cluster-level battery management unit communicatively connected to the energy storage converter.

17. The method according to claim 16, wherein the method further comprises the following:
acquiring the battery information from at least one battery management unit in the energy storage system.

18. The method according to claim 16, wherein the method further comprises the following:
storing the battery information.
